Europäisches Patentamt

European Patent Office

Office européen des brevets

(19)

(11) Publication number : **0 529 839 A1**

## (12) EUROPEAN PATENT APPLICATION

(21) Application number : **92307187.2**

(22) Date of filing : **06.08.92**

(51) Int. Cl.$^5$ : **C08G 18/10, C08G 18/12, C08G 18/66, C08G 18/50**

(30) Priority : **26.08.91 US 750131**

(43) Date of publication of application :
**03.03.93 Bulletin 93/09**

(84) Designated Contracting States :
**DE FR GB**

(71) Applicant : **TEXACO CHEMICAL COMPANY**
**3040 Post Oak Boulevard**
**Houston, Texas 77056 (US)**

(72) Inventor : **Primeaux, Dudley Joseph**
**Rout 4, Box 229-B4**
**Elgin, Texas 78621 (US)**

(74) Representative : **Brock, Peter William et al**
**URQUHART-DYKES & LORD 91 Wimpole**
**Street**
**London W1M 8AH (GB)**

(54) **Slow curing, polyurea elastomers.**

(57)  Polyurea elastomers, having a slow rate of cure, and suitable as adhesives or as surface coatings can be prepared by the reaction, in the absence of solvent, of an NCO-terminated quasi-prepolymer with a polyoxyalkylene polyamine and an aromatic diamine chain extender.
  The quasi-prepolymers are obtained by reacting polyoxyalkylene polyamine with a stoichiometric excess of aliphatic polyisocyanate.

EP 0 529 839 A1

This invention concerns polyurea elastomers, and more particularly polyureas which are made by reacting, without solvent, polyamine and aromatic diamine with a quasi-prepolymer which is itself made by reacting polyoxyalkylene polyamine with aliphatic polyisocyanate.

Coatings and other compositions containing volatile organics, such as nonaqueous solvents, have come under increasing scrutiny and regulation, due to environmental problems resulting from the use of volatile organics. As alternatives, and due to improvements in spray application, two-component spray elastomers and coatings have shown increased use. These elastomeric systems have traditionally included polyurethanes, polyesters, epoxy-urethanes, acrylic-urethanes and oil-modified urethanes. Solventless-component coatings having 100% solids based on amine-catalyzed polyurethane RIM (reaction injection moulding) technology, have also been used.

Polyurea spray elastomers have also been provided, including solventless systems, based upon polyurea RIM technology. These systems use amine-terminated polyether resins along with amine chain extenders. The polyureas, which do not need catalyst, have extremely fast reactivity and cure times. Polyureas have many advantages, including: higher productivity; fast turnaround time; and improved physical properties, e.g. good hydrolytic and thermal stability. Polyureas find use in both coating and noncoating applications, and are highly versatile materials. Typical polyureas are described in US-A-4705814 and US-A-4732919. The first of these documents describes the preparation of quasi-prepolymers of polyoxyalkylene polyamine reacted with aliphatic isocyanate, which are reacted in the presence of solvent with polyoxyalkylene polyamine, polyol and/or chain extender, including aromatic diamine.

The fast reactivity of polyurea elastomers can result in sensitivity to the manner in which the two components are mixed. Insufficient mixing can lead to poor cure and adhesion properties. Solvents can be added to slow down the reaction, but this would remove the benefits of using solventless systems. It would be highly desirable if coatings could be provided, based on two-component polyurea elastomers made without solvents, and having good cure and adhesion properties, as well as reduced sensitivity to mixing and reaction conditions.

The present invention provides a process for making a polyurea elastomer in which an NCO-terminated quasi-prepolymer (1) obtained by reacting (a) a polyoxyalkylene polyamine with a stoichiometric excess of (b) an aliphatic polyisocyanate, is reacted in the absence of a solvent, with (2) a polyoxyalkylene polyamine (c) and an aromatic diamine (d).

The aliphatic polyisocyanate (b) is preferably an alkarylene, alkylene or cycloalkylene diisocyanate, most preferably tetramethylxylene diisocyanate, isophorone diisocyanate, cyclohexyl diisocyanate, hexamethylene diisocyanate or hydrogenated methylene bis(4-phenylisocyanate).

Preferably the aromatic diamine (d) is a diaminobenzene, most preferably diethyltoluene diamine.

The polyoxyalkylene polyamines (a) and (c), which may be the same or different, each preferably have the formula:

$$H_2N\text{-}(C_nH_{2n}O)_x\{\text{-}Q[\text{-}(OC_nH_{2n})_y\text{-}NH_2]_a\}_b\{\text{-}C_nH_{2n}NH_2\}_{1\text{-}b}$$

wherein Q is the polyvalent residue of an active hydrogen compound, having a valence of a + 1,

a is at least 2,

b is O or 1,

n is at least 2, and

x + y is at least 2.

It has been discovered that polyurea elastomers can be made as 100% solids having the versatility and range of desirable properties characteristic of polyurea elastomers, while also providing good cure and adhesion under less stringent mixing conditions. The polyureas are based on mixtures of select aliphatic and aromatic compounds having slower reactivities, enabling easier handling.

The aliphatic polyisocyanate may be any compound having two or more isocyanate groups bonded to aliphatic segment(s). Aliphatic polyisocyanates include compounds shown by Formula 1.

$$R(\text{-}NCO)_z \qquad (1)$$

In Formula 1, R is an organic radical having a valence $\underline{z}$ with aliphatic segments adjacent to each isocyanate group. R can be: straight or branch chain, acyclic, cyclic, or heterocyclic, saturated, unsaturated, or include aromatic, unsubstituted or halo-substituted hydrocarbylene having at least 1, preferably from 6 to 25, and most preferably from 6 to 12 carbon atoms. The number of isocyanate groups, defined by $\underline{z}$, is at least 2, preferably from 2 to 4, and most preferably 2. Typical aliphatic polyisocyanates include, among others, one or more of the following: alkylene polyisocyanates with 4 to 12 carbon atoms in the alkylene radical, such as 1,12-dodecane diisocyanate, 1-4,tetramethylene diisocyanate and 1,6-hexamethylene diisocyanate; cycloaliphatic diisocyanates, such as 1,3-and 1,4-cyclohexane diisocyanate, 1-isocyanato-3,3,5-trimethyl-5-isocyanatomethylcyclohexane (isophorone diisocyanate), and 4,4′-,2,2′- and 2,4′-dicyclohexylmethane diisocyanate; alkaryl and aralkyl diisocyanates, such as tetraalkylxylene diisocyanates such as tetramethylxylene diisocyanate; trimerized or biuretic polyisocyanates, and other aliphatic isocyanates, such as described in US-A-4465713, US-A-4705814 and US-A-4748192.

The polyoxyalkylene polyamine may be any polyoxyalkylene polyamine. It can be a primary and/or secondary amine-terminated polyether polyol, typically having a weight average molecular weight of more than 100 and preferably from 200 to 5,000; a functionality of 2 to 6, and preferably 2 to 3; and an amine equivalent weight of 750 to 4,000. Polyoxyalkylene polyamines include compounds shown in Formula 2.

$$H_2N-(C_nH_{2n}O)_x\{-Q[-(OC_nH_{2n})_y-NH_2]_a\}_b\{-C_nH_{2n}NH_2\}_{1-b} \qquad (2)$$

in which Q is the polyvalent residue of an active hydrogen containing compound used as an initiator for making tri- or higher-functional polyoxyalkylene amines, and having a valence of $a$ + 1, where $a$ is at least 2, preferably from 2 to 5, and most preferably 2. The degree of amine functionality is determined by $b$, which may be 0 or 1. When $b$ is 0, Formula 1 covers diamines, whereas when $b$ is 1 Formula 1 covers tri- or higher-amines. The number of carbon atoms in each alkylene repeating unit is defined by $n$, each of which is individually at least 2, preferably 2 or 3, and most preferably 3. The amount of oxyalkylene is given by $x$ and each $y$, which is present $a$ times. The sum of $x$ plus all $y$'s is at least 2, preferably from 2 to 200, and most preferably from 2 to 85.

Typical initiators include, among others, one of more of the following: polyhydroxy compounds, including diols such as ethylene glycol, propylene glycol, and 1,2- or 1,4-butanediol; and triols such as trimethylolpropane and glycerol. Preferred initiators include trimethylolpropane and glycerol. Typical oxyalkylene repeating units include oxyethylene, oxypropylene, oxybutylene, and so on, including mixtures thereof. When two or more oxyalkylenes are used, they may be present in any form, such as randomly or in blocks. Preferred polyoxyalkylene polyamines include JEFFAMINE® polyoxyalkylene amines from Texaco Chemical Co. Inc., such as diamines D-230, D-400, D-2000 and D-4000, and triamines T-403, T-3000 and T-5000.

The aliphatic polyisocyanate polyoxyalkylene polyamine mixture contains at least a stoichiometric excess of aliphatic polyisocyanate to polyoxyalkylene polyamine. Generally more than 1, preferably from 1.5 to 25, and most preferably from 10 to 25, equivalent moles of isocyanate are used per mole of amine.

Although no additional ingredients, such as solvent or catalyst, are needed or preferred to conduct the reaction, any other suitable materials may be present, if desired.

The reaction between the aliphatic polyisocyanate and the polyoxyalkylene polyamine may be conducted under any suitable conditions for effecting reactions between isocyanates and amines. Typically, reactions are conducted under ambient temperature and pressure. Since the reaction precedes rapidly, the ingredients are preferably thoroughly mixed, such as using a high speed mixer. Moreover, intensive mixing is desirable, since handmixing may not be sufficiently intense to produce a proper distribution of isocyanate and amine, especially T-403 or D-230 (see US-A-4897430).

The aliphatic polyisocyanate and polyoxyalkylene polyamine react to produce a polyurea polyisocyanate quasi-prepolymer. The term "quasi-prepolymer" describes a mixture of monomers and oligomers, essentially dimers, made using a stoichiometric excess of one type of monomer, in this case polyisocyanate, as compared with the other monomer, i.e. polyamine.

Polyurea elastomer can be made by reacting the quasi-prepolymer with a mixture of polyoxyalkylene polyamine and aromatic diamine. The polyoxyalkylene polyamine can be one or more of the previously described polyoxyalkylene polyamines, such as set forth in Formula 2.

The aromatic diamine may be any aromatic compound having two amine groups. Aromatic diamines include compounds shown by Formula 3.

$$H_2N-R'-NH_2 \qquad (3)$$

wherein R' has one or more arylene groups attached to the amine groups, with at least 6, preferably from 6 to 25, and most preferably about 11 carbon atoms. Typical aromatic diamines include, among others, one or more of the following: diaminobenzenes such as 1-methyl-3,5-diethyl-2,4-diaminobenzene, 1-methyl--3,5-diethyl-2,6-diaminobenzene (both of which are commonly called diethyltoluene diamine, or DETDA), 1,3,5-triethyl-2,6-diaminobenzene, t-butyltoluene diamine; polynuclear aromatic compounds including alkyl substituted diaminodiphenylmethanes, such as 3,5,3',5-tetraethyl-4,4'-diaminodiphenylmethane; and other suitable aromatic diamines. The aromatic diamines act as chain extenders as well as agents which help limit the rate of reaction with the aliphatic polyisocyanate.

Other materials may be added, if desired, to the reaction. These optional ingredients include, among others, one or more of the following: other chain extenders, such as low molecular weight polyoxyalkylene polyamines; foam stabilizers, such as silicone oil or emulsifier, organic silane or siloxane; pigments or colouring agents, such as titanium dioxide; reinforcing materials, such as chopped or milled glass fibres, carbon fibres and/or other mineral fibres; blowing agents; catalysts, such as tertiary amines or organic tin compounds; fillers; surfactants; and any other suitable materials.

The reaction of the quasi-prepolymer with the polyoxyalkylene polyamine and aromatic diamine is conducted without, i.e. in the substantial absence of, solvent. The resulting polyurea elastomer will, when other liquid additives are not provided, contain 100% solids. If desired, other additives, including liquids, may be added to the polyurea elastomer. Solvent may also be added, if desired, after the polymerization is conducted.

The relative amount of polyoxyalkylene polyamine to quasi-prepolymer is any amount sufficient to make polyurea elastomer product. Typically, from 0.75 to 1.5, preferably from 0.85 to 1.25, and most preferably from 0.9 to 1.1, moles of amine are provided per mole of isocyanate. The polyoxyalkylene polyamine and quasi-prepolymer, along with any other optional ingredients, are reacted under any suitable conditions. Typically, the temperature during the reaction may be from 0 to 80°C, preferably from 15 to 80°C, and most preferably from 25 to 75°C. The components can be combined under ambient or higher pressures of up to 21 MPa (3,000 psig) preferably from 3.5 to 17.5 MPa (500 to 2,500 psig) and most preferably from 7 to 14 MPa (1,000 to 2,000 psig).

When used in spray applications, the components can be impingement mixed directly, using high pressure spray equipment, such as a GUSMER® VR-H-2000 proportioner fitted with a GX-7 spray gun. The components are typically applied at a rate of at least 0.25 Kg/min (0.5 pounds per minute), and preferably from 0.5 to 15 Kg/min (1 to 30 pounds per minute) and most preferably at 10 Kg/min (20 pounds per minute). Alternatively, and advantageously due to the slower reactivity of the components, the components may be mixed using any general mixing technique and applied to a substrate, mould or other usage following any suitable procedures.

The components react substantially more slowly than other isocyanate/amine components, enabling their use in a wide variety of areas, such as paints or other coatings, adhesives, binders, joint fill, sealants or other uses for polyurea elastomers. Generally, the components will react to produce polyurea elastomer after at least 10 minutes, preferably from 10 minutes to 24 hours, and most preferably from 30 minutes to 12 hours.

The following examples present illustrative embodiments of this invention. All percentages given in the disclosure and claims are in weight percent, unless otherwise stated.

EXAMPLES

Terms used in the examples have the following meanings:

| Term | Description |
|------|-------------|
| DETDA | Diethyltoluene diamine, called DETDA OR ETHACURE® 100 from Ethyl Corp. |
| D-2000 | Polyoxypropylene diamine having a weight average molecular weight of about 2,000, called JEFFAMINE® D-2000 from Texaco Chemical Co. Inc. |
| m-TMXDI | m-$\alpha,\alpha,\alpha',\alpha'$-tetramethyl-$\alpha,\alpha'$-diisocyanatoxylene, i.e. 1,3-bis(1-isocyanato-1-methylethyl)benzene, called m-TMXDI® from American Cyanamid Co. Inc. |
| T-3000 | Polyoxypropylene triamine, made with glycerine initiator, having a weight average molecular weight of about 3,000, called JEFFAMINE® T-3000 from Texaco Chemical Co. Inc. |
| T-5000 | Polyoxypropylene triamine, made with glycerine initiator, having a weight average molecular weight of about 5,000, called JEFFAMINE® T-5000 from Texaco Chemical Co. Inc. |

Unless otherwise indicated, test results given in the Examples use the following procedures:

Elongation: determined by standard ASTM D-638 procedure, given in percent.

Modulus: determined by standard ASTM D-638 and D-790 procedure for 100% and 300% tests, given in MPa and psi.

Shore Hardness: determined by standard ASTM D-2240 procedure, given at initial measurement (0 seconds).

Tear strength: determined by standard ASTM D-624 procedure, given in Newtons per metre and pounds per linear inch (pli).

Tensile strength: determined by standard ASTM D-638 procedure including, given in MPa and psi.

Water Adsorption: determined by standard ASTM E-96, procedure, given in percentage.

Example 1: Quasi-prepolymer Preparation

This example shows how to make quasi-prepolymer. 60.0 parts of a 20:80 blend of T-5000/D-2000 are added with vigourous agitation to 40 parts of m-TMXDI under ambient conditions. The reaction takes approximately 15 minutes to complete.

Examples 2 and 3: Polyurea Adhesives Preparation

These examples show how to make polyureas useful as adhesives. Quasi-prepolymer prepared in Example 1 is mixed with the amount and type of polyoxyalkylene polyamines and aromatic diamine blends, as set forth in Table 1, at a prepolymer to amine volume ratio of 1.00. The corresponding prepolymer to amine weight ratio, based on the index of components used, is set forth in Table 1. The components are mixed with a wooden spatula for 20 seconds. The mixture is then spread on a mould-released, aluminium plate and allowed to stand overnight. A very tough clear film resulted.

TABLE 1

POLYUREA ADHESIVES

| Example No. | 2 | 3 |
|---|---|---|
| **Amines:** | | |
| T-5000 | 80.5 | 41.1 |
| D-2000 | - | 41.4 |
| DETDA | 19.5 | 17.8 |
| Index | 1.05 | 1.05 |
| NCO/NH$_2$ | 1.04 | 1.04 |

Examples 4 and 5: Polyurea Coatings and Analysis

In these examples, the procedure of Examples 2 and 3 is repeated and the materials were applied to mould-released, aluminium panels using a paint brush. The amount of time used to apply the mixture is a little more than 5 minutes after combining the two components. The resulting films are stripped from the aluminium panels after 12 hours. The physical properties of the elastomer are tested, using the previously described procedures, with the results set forth in Table 2. It is also observed that after exposure to sunlight for over a month, no apparent colouring of the transparent films occurs, indicating ultraviolet light stability for these materials.

## TABLE 2

### POLYUREA COATINGS

| | Example 4 | Example 5 |
|---|---|---|
| Polyurea Example | Ex. 2 | Ex. 3 |
| **Film Properties:** | | |
| Tensile Strength (psi) | 1,959 | 1,109 |
| Tensile Strength (MPa) | 13.51 | 7.65 |
| Elongation (%) | 630 | 470 |
| Tear Strength (pli) | 309 | 187 |
| Tear Strength (N/m) | 541 | 327.5 |
| Shore D Hardness | | |
| 0 sec | 40 | 34 |
| 10 sec | 34 | 28 |
| Modulus (psi) | | |
| 100% | 638 | 553 |
| 300% | 1,130 | 900 |
| Modulus (MPa) | | |
| 100% | 4.40 | 3.81 |
| 300% | 7.79 | 6.21 |
| Water Absorption (% gain) | 0.56 | 0.20 |

## Claims

1. A process for making a polyurea elastomer characterised in that an NCO-terminated quasi-prepolymer (1) obtained by reacting (a) a polyoxyalkylene polyamine with a stoichiometric excess of (b) an aliphatic polyisocyanate, is reacted in the absence of a solvent, with (2) a polyoxyalkylene polyamine (c) and an aromatic diamine (d).

2. A process according to Claim 1 characterised in that the aliphatic polyisocyanate (b) is an alkarylene, alkylene or cycloalkylene diisocyanate.

3. A process according to Claim 2 characterised in that the diisocyanate is tetramethylxylene diisocyanate, isophorone diisocyanate, cyclohexyl diisocyanate, hexamethylene diisocyanate or hydrogenated methylene bis(4-phenylisocyanate).

4. A process according to any one of claims 1 to 3 characterised in that the aromatic diamine (d) is a diaminobenzene.

5. A process according to claim 4 characterised in that the diaminobenzene is diethyltoluene diamine.

6. A process according to any one of claims 1 to 5 characterised in that the polyoxyalkylene polyamines ( a) and (c), which may be the same or different, each have the formula:
$$H_2N-(C_nH_{2n}O)_x\{-Q[-(OC_nH_{2n})_y-NH_2]_a\}_b\{-C_nH_{2n}NH_2\}_{1-b}$$
wherein Q is the polyvalent residue of an active hydrogen compound, having a valence of a + 1,
a is at least 2,
b is O or 1,
n is at least 2, and
x + y is at least 2.

7. A process according to claim 6 characterised in that the polyoxyalkylene polyamines (a) and (c) have from 2 to 6 primary or secondary amine groups and an average molecular weight of at least 1,000.

8. A process according to claim 6 characterised in that the polyoxyalkylene polyamines (a) and (c) are polyoxypropylene primary di- or triamines having an average molecular weight of 2,000 to 5,000.

EP 0 529 839 A1

**European Patent Office**

# EUROPEAN SEARCH REPORT

Application Number

EP    92 30 7187

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-4 705 814 (R.A. GRIGSBY ET AL.)<br>* claims 1-7 *<br>* column 2, line 17 - column 3, line 25 *<br>* column 4, line 14 - column 5, line 3 *<br>--- | 1-8 | C08G18/10<br>C08G18/12<br>C08G18/66<br>C08G18/50 |
| X | US-A-5 013 813 (R.L. ZIMMERMAN ET AL.)<br>* claims 1-4,9,11-16 *<br>* column 3, line 11 - line 33 *<br>* column 4, line 44 - column 5, line 55 *<br>* column 6, line 62 - column 7, line 19 *<br>--- | 1-8 | |
| A | DE-A-3 411 216 (BASF)<br>* claims 1,5-7 *<br>* page 7, line 30 - page 11, line 33 *<br>--- | 1 | |
| D,A | US-A-4 732 919 (R.A. GRIGSBY ET AL.)<br>* claims 1-4 *<br>* column 2, line 32 - line 55 *<br>* column 5, line 44 - line 64 *<br><br>----- | 1 | |
| | | | **TECHNICAL FIELDS SEARCHED (Int. Cl.5)**<br><br>C08G |

The present search report has been drawn up for all claims

| Place of search | Date of completion of the search | Examiner |
|---|---|---|
| THE HAGUE | 09 NOVEMBER 1992 | VAN PUYMBROECK M. A. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)

8